(19) Europäisches Patentamt
European Patent Office
Office européen des brevets

(11) Numéro de publication: **0 068 540**
**B1**

# (12) FASCICULE DE BREVET EUROPEEN

(45) Date de publication du fascicule du brevet: **16.01.85**

(51) Int. Cl.[4]: **C 22 B 3/00**, C 01 G 17/00

(21) Numéro de dépôt: **82200685.4**

(22) Date de dépôt: **04.06.82**

## (54) Procédé pour séparer du germanium d'une solution aqueuse à l'aide d'un alpha-hydroxyoxime.

(30) Priorité: **22.06.81 LU 83449**

(43) Date de publication de la demande: **05.01.83 Bulletin 83/1**

(45) Mention de la délivrance du brevet: **16.01.85 Bulletin 85/3**

(84) Etats contractants désignés: **BE DE FR**

(56) Documents cités:
**BE - A - 881 273**
**GB - A - 1 499 139**
**US - A - 3 637 711**
**US - A - 3 883 634**
**US - A - 4 048 187**

**HYDROMETALLURGY, vol. 5, no. 2, 3 février 1980, pages 149-160, Amsterdam (NL); G. COTE et al.: "Liquid-liquid extraction of germanium with oxine derivatives"**
**J. INORG. NUCL. CHEM., vol. 41, 1979, pages 1353-1363, Pergamon Press Ltd., (GB); B. MARCHON et al.: "Some typical behaviours of the beta-dodecenyl-8-gydroxyquinoline through its reactions with germanium (IV)"**
**CHEMICAL ABSTRACTS, vol. 81, 1974, page 265, no. 17259m, Columbus Ohio (USA); N.P. RUDENKO et al.: "Extraction of germanium (IV) 8-hydroxyquinolinate with mixed solvents"**

(73) Titulaire: **METALLURGIE HOBOKEN-OVERPELT Société anonyme dite:, 8, rue Montagne du Parc, B-1000 Bruxelles (BE)**

(72) Inventeur: **De Schepper, Achille, Esdoornlaan 8, B-2451 Lichtaart-kasterlee (BE)**
Inventeur: **Coussement, Marc, Magdalena Vermeerschlaan 18, B-2540 Hove (BE)**
Inventeur: **Van Peteghem, Antoine, Leemanslaan 21, B-2430 Olen (BE)**

(74) Mandataire: **Saelemaekers, Juul et al, METALLURGIE HOBOKEN-OVERPELT A. Greinerstraat 14, B-2710 Hoboken (BE)**

**EP 0 068 540 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un procédé pour séparer du germanium d'une solution aqueuse acide germanifère, suivant lequel:

a) on met la solution en contact avec un liquide organique contenant une α-hydroxyoxime aliphatique en produisant ainsi une phase organique chargée de germanium et une phase aqueuse appauvrie en germanium;

b) on sépare la phase organique chargée de germanium de la phase aqueuse appauvrie en germanium;

c) on met la phase organique chargée de germanium en contact avec une solution aqueuse basique en produisant ainsi une phase organique appauvrie en germanium et une phase aqueuse basique chargée de germanium, et

d) on sépare la phase organique appauvrie en germanium de la phase aqueuse basique chargée de germanium.

Un tel procédé est décrit dans le brevet US-A N° 3883634. Selon ce brevet, on utilise un liquide organique constitué d'un extractant à base d'α-hydroxyoxime aliphatique, dilué ou non par un solvant organique inerte tel que le kérosène. Dans les exemples donnés dans ce brevet, on utilise en tant qu'extractant à base d'α-hydroxyoxime aliphatique le produit vendu sous la marque déposée LIX-63 par la firme Henkel. L'α-hydroxyoxime présente dans LIX-63 (5,8-diéthyl-7-hydroxydodécane-6-oxime) a fait l'objet du brevet US-A N° 3224837 et répond à la formule générale:

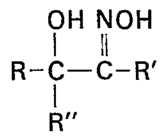
(I)

dans laquelle R et R' représentent des radicaux d'hydrocarbure et R" représente un radical d'hydrocarbure ou de l'hydrogène.

Les exemples du brevet US-A N° 3883634 susdit se rapportent à la récupération du germanium à partir de solutions aqueuses contenant du Ge, As, Zn, Ni, Cu, Fe, C1, et de 130 à 460 g/l de $H_2SO_4$; on utilise pour l'extraction du germanium un liquide organique constitué soit de LIX-63 non dilué, soit de LIX-63 dilué avec 50% de kérosène, soit de LIX-63 dilué avec 30% de kérosène; on réextrait le germanium du liquide organique chargé de germanium, à l'aide d'une solution aqueuse de NaOH à 175 g/l. Il est marqué dans le brevet que le pouvoir extracteur de l'α-hydroxyoxime pour le germanium augmente avec l'acidité de la solution aqueuse, c'est-à-dire que le coefficient de répartition du germanium entre la phase organique et la phase aqueuse augmente avec l'acidité de la phase aqueuse. Par conséquent, le procédé décrit dans le brevet US-A N° 3883634 se prête mieux au traitement de solutions aqueuses germanifères très acides qu'au traitement de solutions aqueuses germanifères à faible acidité, par exemple des solutions ayant une acidité inférieure à 1,5N.

Le but de la présente invention est de fournir un procédé tel que défini ci-dessus, qui se prête beaucoup mieux que le procédé connu susmentionné au traitement de solutions aqueuses germanifères à faible acidité et qui se prête encore mieux que ce procédé connu au traitement de solutions aqueuses germanifères à forte acidité.

A cet effet, suivant l'invention, on ajoute au liquide organique une 8-hydroxyquinoline substituée par au moins un groupe hydrocarboné.

Un tel composé répond à la formule générale:

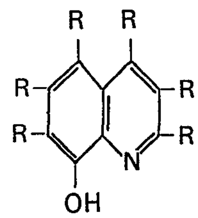
(II)

dans laquelle R est l'hydrogène ou un groupe hydrocarboné tel qu'alkyl, alkényl, cycloaliphatique, aryl ou une combinaison de ceux-ci (par exemple alkaryl, aralkényl, alkylcycloalkyl, aralkyl, etc.), au moins un des substituants R étant un tel groupe hydrocarboné.

Parmi les composés de formule (II), les 7-alkényl-8-hydroxyquinolines, dont de nombreux représentants sont décrits dans le brevet US-A N° 3637711, sont les plus intéressants. On peut par exemple utiliser une 7-alkényl-8-hydroxyquinoline, dont le groupe alkényl est constitué de

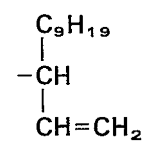

et qui est vendue sous la marque déposée Kelex 100 par la firme Sherex. On peut également utiliser une 7-alkényl-8-hydroxyquinoline vendue sous la marque déposée LIX-26 par la firme Henkel.

Des α-hydroxyoximes aliphatiques, qui peuvent être utilisées dans le procédé de la présente invention, sont décrites dans le brevet US-A N° 3224837 susdit.

Il a été trouvé par la titulaire qu'il existe une synergie remarquable entre les α-hydroxyoximes aliphatiques de formule (I) et les 8-hydroxyquinolines substituées de formule (II) pour ce qui concerne l'extraction de germanium, comme il ressort clairement du diagramme de la fig. 1 ci-jointe, qui représente:

– en 1, la courbe d'extraction du germanium d'une solution aqueuse, contenant 30 g/l de $H_2SO_4$ et 20 g/l de HCl, à l'aide d'un liquide organique constitué de 2% en volume de LIX-26, de 25% en volume d'isodécanole et de 77% en volume de kérosène (l'isodécanole étant un agent empêchant la formation d'émulsion et le kérosène étant un diluant inerte);

– en 2, la courbe d'extraction du germanium de la même solution aqueuse à l'aide d'un liquide organique constitué de 100% de LIX-63, et

– en 3, la courbe d'extraction du germanium de la même solution aqueuse à l'aide d'un liquide

organique constitué de 99% en volume de LIX-63 et de 1% en volume de LIX-26.

On constate qu'une concentration de 1 g/l de Ge dans la phase aqueuse est en équilibre avec une concentration de 0,625 g/l de Ge dans la phase organique dans le premier cas (courbe 1), avec une concentration de 1,63 g/l de Ge dans la phase organique dans le deuxième cas (courbe 2) et avec une concentration de 3,55 g/l de Ge dans la phase organique dans le troisième cas (courbe 3). Cette dernière concentration (3,55 g/l) est donc sensiblement supérieure à la somme des deux concentrations précédentes (2,255 = 0,625 + 1,63), ce qui prouve qu'il y a de la synergie dans le troisième cas; autrement, on aurait dû trouver dans le troisième cas une concentration de Ge dans la phase organique sensiblement inférieure à 2,255 g/l, puisqu'on utilise dans ce troisième cas seulement 1% en volume de LIX-26 au lieu de 2% dans le premier cas.

Des résultats pareils ont été obtenus avec des mélanges de LIX-63 et de Kelex 100.

Il est à noter que l'on savait déjà que le germanium est extrait en milieu acide par une 8-hydroxyquinoline substituée («Hydrometallurgy», 1980, N° 5, 149-160). Cependant, on ne savait pas encore qu'il y avait une synergie entre les α-hydroxyoximes aliphatiques et les 8-hydroxyquinolines substituées.

Cette synergie se manifeste déjà sensiblement lorsqu'on ajoute au liquide organique 0,5% en volume de la 8-hydroxyquinoline substituée. Quoique cette synergie se manifeste encore lorsqu'on ajoute au liquide organique plus de 5% en volume de la 8-hydroxyquinoline substituée, il n'est pas recommandé d'utiliser un liquide organique ayant une telle teneur en 8-hydroxyquinoline substituée, parce que la réextraction du germanium du liquide organique devient alors très difficile, à moins que l'on effectue cette réextraction, c'est-à-dire les étapes c et d, dans les conditions spéciales décrites dans la demande de brevet européen intitulée «Procédé pour séparer du germanium d'une solution aqueuse» déposée sous le N° 82.200686.2 (N° de publication: 0068541) au même jour que la présente demande par la titulaire du présent brevet.

Il est à noter qu'une partie de l'acide contenu dans la solution aqueuse germanifère de départ est coextraite avec le germanium par le liquide organique dans l'étape a, si ce liquide organique n'est pas préalablement acidifié, c'est-à-dire mis en contact avec une solution acide. La phase aqueuse appauvrie en germanium produite dans l'étape a présente donc une acidité plus faible que la solution aqueuse de départ, si le liquide organique n'a pas été acidifié préalablement.

Il est avantageux de veiller à ce que l'acidité de la phase aqueuse appauvrie en germanium, produite dans l'étape a (et séparée dans l'étape b), ne soit pas inférieure à 0,1 N parce que, autrement, le rendement d'extraction du germanium devient faible.

Une acidité très élevée de par exemple 8N ne gêne nullement dans l'étape a. On peut donc traiter par le procédé de la présente invention des solutions aqueuses germanifères très acides. Le seul inconvénient qu'entraîne le traitement de solutions très acides réside dans le fait qu'on doit ultérieurement neutraliser beaucoup d'acide dans l'étape c. Pour cette raison, il n'est pas indiqué d'utiliser une solution aqueuse de départ dont l'acidité est supérieure à 2N, à moins que les conditions de préparation de la solution de départ, par exemple par lixiviation d'une matière germanifère, n'imposent une acidité supérieure à 2N.

Lorsqu'on veut produire dans l'étape a une phase aqueuse appauvrie en germanium d'une acidité prédéterminée, on peut utiliser un liquide organique qui n'a pas été acidifié préalablement, mais il faut alors soit utiliser une solution aqueuse de départ, dont l'acidité est sensiblement supérieure à l'acidité prédéterminée susdite, soit ajouter de l'acide au cours de l'étape a. Pour atteindre ce même but, il est cependant plus avantageux d'utiliser un liquide organique préalablement acidifié et une solution de départ dont l'acidité n'est pas sensiblement différente de l'acidité prédéterminée susdite, comme il sera expliqué plus loin.

Il est très utile de prévoir entre les étapes b et c une opération de lavage, qui consiste à mettre la phase organique chargée de germanium en contact avec de l'eau. On réextrait ainsi de la phase organique une partie de l'acide qu'elle contient et qui, autrement, aurait dû être neutralisée dans l'étape c.

Si la phase organique germanifère contient des impuretés telles que du fer et de l'arsenic, on réextrait également une partie de ces impuretés. Par cette opération de lavage, on produit donc, d'une part, une phase organique germanifère partiellement désacidifiée et partiellement épurée et, d'autre part, une phase aqueuse acide impure. Après séparation de ces phases, on envoie la phase organique à l'étape c et on peut ajouter la phase aqueuse à de la solution de départ qui doit encore passer par l'étape a.

La phase organique appauvrie en germanium qui résulte de l'étape d et qui peut encore contenir des impuretés telles que Fe peut être recyclée telle quelle vers l'étape a. Il est toutefois préférable d'acidifier cette phase organique, avant son recyclage, en la mettant en contact avec une solution aqueuse acide puisque, au cours de cette opération, le fer passe de la phase organique dans la phase aqueuse; après séparation des deux phases, on peut donc recycler une phase organique épurée.

Un mode préféré de réalisation du procédé de l'invention est illustré par le schéma de la fig. 2 ci-jointe. Il comporte essentiellement les opérations d'extraction liquide-liquide suivantes: l'extraction du germanium de la solution de départ, le lavage de la phase organique germanifère, la réextraction du germanium de la phase organique germanifère lavée et l'acidification de la phase organique déchargée. Chacune de ces opérations peut être effectuée dans un appareil traditionnel d'extraction liquide-liquide, par exemple dans un mélangeur-décanteur lorsque l'opération est effectuée en un étage ou dans une batterie de mélangeurs-décanteurs lorsque l'opération est effectuée en plusieurs étages.

Il est à noter que le procédé de la présente invention est particulièrement utile pour traiter des solutions aqueuses germanifères qui sont pratiquement exemptes de cuivre, c'est-à-dire des solutions qui contiennent moins de 0,1 g/l et de préférence moins de 0,01 g/l de Cu, étant donné que la titulaire a trouvé que le cuivre constitue un poison pour l'α-hydroxyoxime en ce sens que le cuivre est fixé par l'α-hydroxyoxime aussi bien en milieu acide qu'en milieu basique, ce qui fait qu'il ne peut plus être séparé de l'α-hydroxyoxime. Pour traiter des solutions aqueuses germanifères ayant une teneur substantielle en cuivre, il est donc recommandé de faire appel au procédé faisant l'objet de la demande de brevet européen susdite.

*Exemple*

Cet exemple se rapporte à la séparation du germanium d'une solution aqueuse contenant (en g/l): 3,5 Ge; 0,8 As; 1,5 $Fe^{3+}$; 50 $H_2SO_4$.

Le liquide organique est constitué de 99% en volume de LIX-63 et de 1% en volume de LIX-26 et il contient 4,5 g/l de $H_2SO_4$.

Toutes les opérations qui suivent sont effectuées à la température ambiante.

On effectue l'extraction du germanium en contre-courant, en 4 étages et avec un rapport volumétrique entre la phase organique et la phase aqueuse (appelé ci-après rapport O:A) de 1:1.

On obtient ainsi une phase organique germanifère et un raffinat pratiquement exempt de germanium. La phase organique contient (en g/l): 3,49 Ge; 0,2 As; 0,4 $Fe^{3+}$; 3 $H_2SO_4$. Le raffinat contient (en g/l): 0,005 Ge; 0,6 As; 1,1 $Fe^{3+}$; 51,5 $H_2SO_4$.

On lave la phase organique germanifère avec de l'eau. On effectue cette opération en contre-courant, en 2 étages, et avec un rapport O:A de 10:1.

On obtient ainsi une phase organique germanifère lavée et une eau de lavage acide. La phase organique germanifère lavée contient (en g/l): 3,37 Ge; 0,05 As; 0,31 $Fe^{3+}$; 0,5 $H_2SO_4$. L'eau de lavage acide contient ( en g/l): 1,2 Ge; 1,5 As; 0,9 Fe; 25 $H_2SO_4$.

On réextrait le germanium de la phase organique germanifère lavée avec une solution aqueuse de NaOH à 150 g/l. On effectue cette opération en contre-courant, en 5 étages, et avec un rapport O:A de 10:1.

On obtient ainsi une phase organique déchargée de germanium et un éluat germanifère. La phase organique déchargée de germanium contient (en g/l): 0,015 Ge; 0 As; 0,31 $Fe^{3+}$. L'éluat germanifère contient (en g/l): 33,69 Ge; 0,5 As; 0 $Fe^{3+}$.

On acidifie la phase organique déchargée de germanium avec une solution aqueuse de $H_2SO_4$ à 250 g/l, en un seul étage, et avec un rapport O:A de 5:1.

On obtient ainsi une phase organique régénérée et une solution aqueuse impure. La phase organique régénérée contient (en g/l): 0,015 Ge; 0,01 $Fe^{3+}$; 4,5 $H_2SO_4$. La solution aqueuse impure contient (en g/l): 0,001 Ge; 1,5 $Fe^{3+}$; 150 $H_2SO_4$.

## Revendications

1. Procédé pour séparer du germanium d'une solution aqueuse acide germanifère, suivant lequel:

a) on met la solution en contact avec un liquide organique contenant une α-hydroxyoxime aliphatique en produisant ainsi une phase organique chargée de germanium et une phase aqueuse appauvrie en germanium.

b) on sépare la phase organique chargée de germanium de la phase aqueuse appauvrie en germanium,

c) on met la phase organique chargée de germanium en contact avec une solution aqueuse basique en produisant ainsi une phase organique appauvrie en germanium et une phase aqueuse basique chargée de germanium, et

d) on sépare la phase organique appauvrie en germanium de la phase aqueuse basique chargée de germanium,

caractérisé en ce qu'on ajoute au liquide organique une 8-hydroxyquinoline substituée par au moins un groupe hydrocarboné.

2. Procédé selon la revendication 1, caractérisé en ce qu'on ajoute au liquide organique d'environ 0,5 à environ 5% en volume de la 8-hydroxyquinoline substituée.

3. Procédé selon l'une des revendications 1 ou 2, caractérisé en ce qu'on produit dans l'étape a une phase aqueuse appauvrie en germanium dont l'acidité est au moins 0,1 N.

4. Procédé selon l'une des revendications 1, 2 ou 3, caractérisé en ce qu'on utilise une solution aqueuse acide germanifère contenant moins de 0,1 g/l de Cu.

5. Procédé selon l'une des revendications précédentes, caractérisé en ce qu'on lave à l'eau la phase organique chargée de germanium résultant de l'étape b.

6. Procédé selon l'une des revendications précédentes, caractérisé en ce qu'on acidifie la phase organique appauvrie en germanium résultant de l'étape d.

7. Procédé selon l'une des revendications précédentes, caractérisé en ce qu'on utilise, en tant que 8-hydroxyquinoline substituée, une 7-alkényl-8-hydroxyquinoline.

## Claims

1. Process for separating germanium from a germanium-containing aqueous acid solution, according to which—

(*a*) the solution is contacted with an organic liquid containing an aliphatic α-hydroxyoxime, thereby producing a germanium-loaded organic phase and an aqueous phase depleted in germanium;

(*b*) the germanium-loaded organic phase is separated from the aqueous phase depleted in germanium;

(*c*) the germanium-loaded organic phase is contacted with an aqueous basic solution, thereby producing an organic phase depleted in germanium and a germanium-loaded basic aqueous phase; and

(*d*) the organic phase depleted in germanium is separated from the germanium-loaded basic aqueous phase,
characterized in that a 8-hydroxyquinoline substituted by at least one hydrocarbon group is added to said organic liquid.

2. A process according to Claim 1, characterized in that from about 0.5 to about 5% in volume of the substituted 8-hydroxyquinoline is added to said organic liquid.

3. A process according to Claim 1 or 2, characterized in that in step (*a*) an aqueous phase depleted in germanium is produced, the acidity of which is at least 0.1 N.

4. A process according to Claim 1, 2 or 3, characterized in that a germanium-containing aqueous acid solution is used that has a copper content of less than 0.1 g/l.

5. A process according to any of the preceding claims, characterized in that the germanium-loaded organic phase resulting from step (*b*) is washed with water.

6. A process according to any of the preceding claims, characterized in that the organic phase depleted in germanium resulting from step (*d*) is acidified.

7. A process according to any of the preceding claims, characterized in that a 7-alkenyl-8-hydroxyquinoline is used as a substituted 8-hydroxyquinoline.

## Patentansprüche

1. Verfahren zur Abtrennung des Germaniums aus einer wässerigen, sauren germaniumhaltigen Lösung, bei dem man

a) die Lösung mit einer organischen Flüssigkeit, die ein aliphatisches α-Hydroxyoxim enthält, in Berührung bringt, wodurch eine mit Germanium beladene organische Phase und eine an Germanium verarmte wässerige Phase entsteht,

b) die mit Germanium beladene organische Phase von der an Germanium verarmten wässerigen Phase trennt,

c) die mit Germanium beladene organische Phase mit einer wässerigen basischen Lösung in Berührung bringt, wodurch eine an Germanium verarmte organische Phase und eine wässerige, basische mit Germanium beladene Phase entsteht, und

d) die an Germanium verarmte organische Phase von der wässerigen, basischen mit Germanium beladenen Phase trennt,
dadurch gekennzeichnet, dass man der organischen Flüssigkeit ein zumindest mit einer Kohlenwasserstoffgruppe substituiertes 8-Hydroxychinolin zufügt.

2. Verfahren nach Anspruch 1, dadurch gekennzeichnet, dass man der organischen Flüssigkeit etwa 0,5 bis etwa 5 Vol.-% des substituierten 8-Hydroxychinolins zufügt.

3. Verfahren nach einem der Ansprüche 1 oder 2, dadurch gekennzeichnet, dass man in der Stufe (a) eine wässerige an Germanium verarmte Phase herstellt, deren Azidität mindestens 0,1 n ist.

4. Verfahren nach einem der Ansprüche 1, 2 oder 3, dadurch gekennzeichnet, dass man eine wässerige, saure germaniumhaltige Lösung verwendet, die weniger als 0,1 g/l Cu enthält.

5. Verfahren nach einem der vorhergehenden Ansprüche, dadurch gekennzeichnet, dass man die aus der Stufe (b) hervorgehende organische, mit Germanium beladene Phase mit Wasser wäscht.

6. Verfahren nach einem der vorhergehenden Ansprüche, dadurch gekennzeichnet, dass man die aus der Stufe (d) hervorgehende organische, an Germanium verarmte Phase ansäuert.

7. Verfahren nach einem der vorhergehenden Ansprüche, dadurch gekennzeichnet, dass man als substituiertes 8-Hydroxychinolin ein 7-Alkenyl-8-hydroxychinolin verwendet.

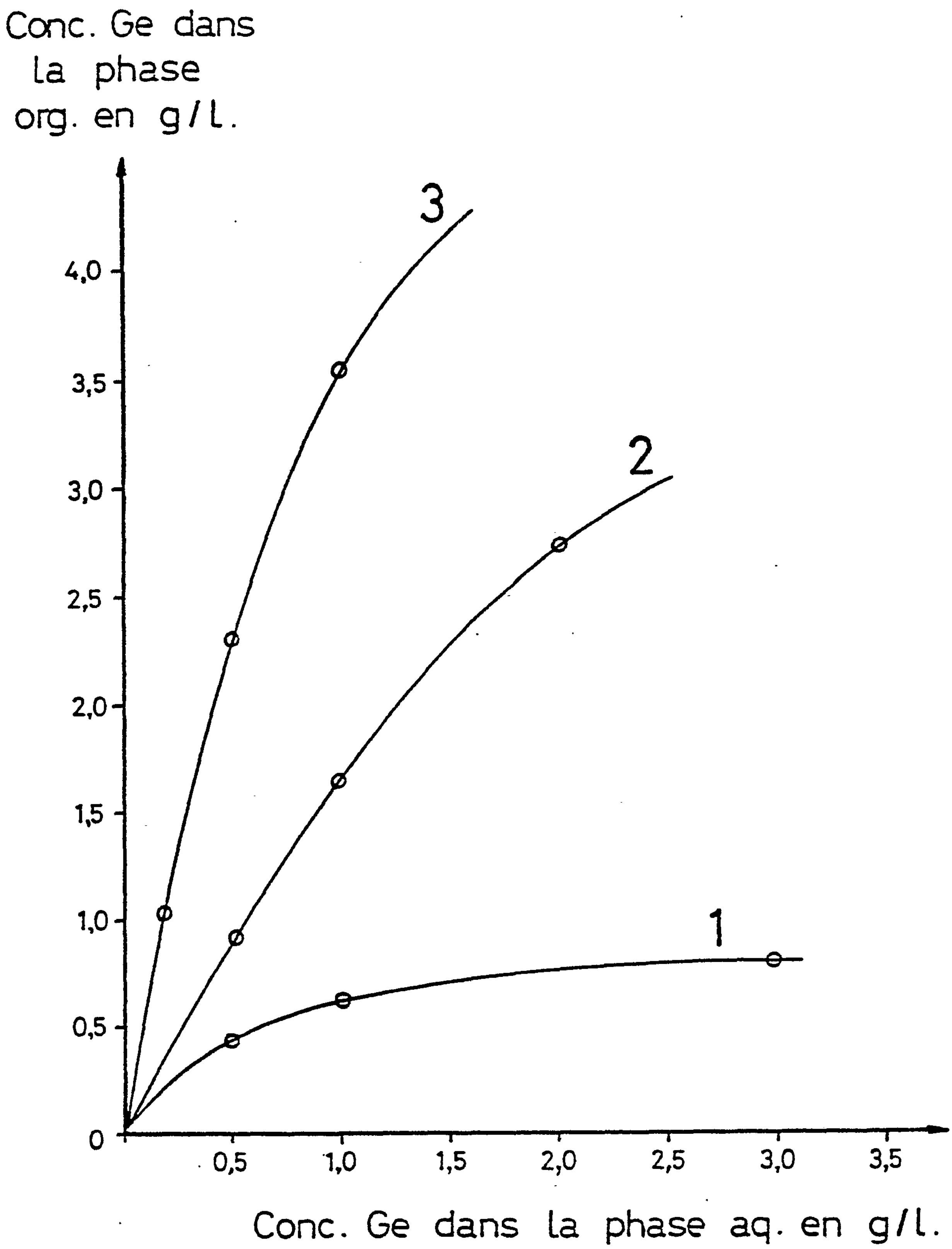
Conc. Ge dans
la phase
org. en g/l.
3
2
1
4,0
3,5
3,0
2,5
2,0
1,5
1,0
0,5
0
0,5
1,0
1,5
2,0
2,5
3,0
3,5
Conc. Ge dans la phase aq. en g/l.

FIGURE 1

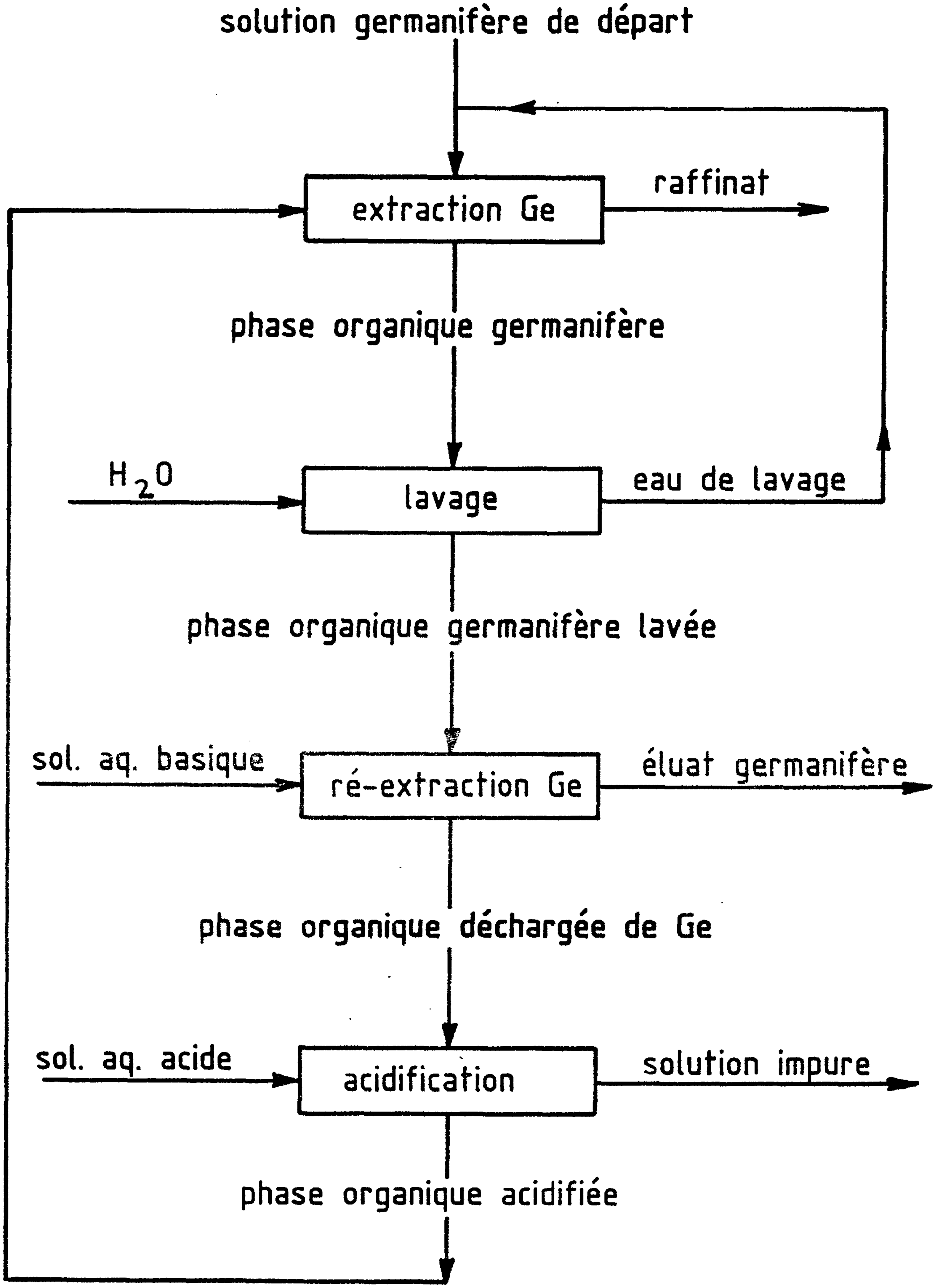
solution germanifère de départ
extraction Ge
raffinat
phase organique germanifère
$H_2O$
lavage
eau de lavage
phase organique germanifère lavée
sol. aq. basique
ré-extraction Ge
éluat germanifère
phase organique déchargée de Ge
sol. aq. acide
acidification
solution impure
phase organique acidifiée



Figure 2.